# EUROPEAN PATENT APPLICATION

(11) **EP 0 837 303 A1**
(43) Date of publication of application: **22.04.1998**
(21) Application number: 97402390.5
(22) Date of filing: 10.10.1997
(51) Int. Cl.: G01F 1/84

(54) **A flow meter based on using Coriolis forces**

(30) Priority: 15.10.1996 FR 9612557
(71) Applicant: SOFITECH N.V., 1180 Bruxelles (BE)
(72) Inventor: Vigneaux, Pierre, 77950 Moisenay (FR)
(74) Representative: Menès, Catherine

(57) **Abstract**

The flow meter comprises a tube (4) that vibrates under drive from a generator (7) with the displacements of the tube being measured by two sensors (8 and 9) producing signals that are phase-shifted by the Coriolis force acting on the fluid flowing along the tube (4), in a manner that is indicative of its mass flow rate. The originality of the invention consists in a jacket (5) surrounding the tube (4) and in which a fluid (6) is contained and is kept automatically at the same pressure as the flow. This makes it possible to use tubes (4) that are thin and flexible even with flows that are at high pressure.

## Description

The invention relates to a flow meter based on making use of Coriolis forces.

Flow meters of this category comprise a tube that is capable of being in a very wide variety of shapes (straight, looped, folded) through which there flows a fluid whose flow rate is to be measured. A vibration generator serves to excite the tube and two sensors measure displacements thereof at two different locations, normally on either side of the vibration generator. It turns out that the displacements measured by the sensors are in phase when the flow rate is zero but are subject to time shifting otherwise, with the shift being proportional to the mass flow rate.

The simplicity of such flow meters makes them attractive under rugged conditions of use, e.g. at drilling sites. Unlike other methods, they measure mass flow rates, which makes them most advantageous in certain applications, particularly for fluids that are charged with impurities in suspension, bubbles of gas, or fluids that are compressible and of pressure that is not known accurately. In addition, the resonant frequency of the tube, which is inversely proportional to the square root of the sum of the mass of the tube and its contents, can be used to determine the density of the fluid.

Thus, flow meters of this category are already widely used for applications at low and medium pressures, and would be advantageous for use in measuring flow rates and densities at high pressure, particularly at the outlets of injection pumps. Unfortunately, known structures are limited in this respect because in order to be able to measure the displacements of a tube it is necessary for the tube not to be too rigid, and that is hardly compatible with high pressure applications. In addition, the tube must be of small diameter since rigidity is proportional to the fourth power of diameter. Thus, for high pressure measurements, such flow meters are restricted to small flow rates.

As a result of such limitations, Coriolis force flow meters cannot be used in certain situations, and in other situations it is necessary to make the tube out of a material that is as expensive as titanium. These devices are therefore used much less than their simplicity of structure might lead one to imagine, and instead use is made of density meters based on absorbing radioactive radiation, which are dangerous and which do not enable flow rate to be measured.

The invention relates to an improved flow meter based on making use of Coriolis force and capable of withstanding high pressure, the flow meter having a tube that is thin enough to be suitable for measuring displacements, and this is achieved without the tube being too long.

The flow meter of the invention comprises a tube conveying a fluid whose flow rate is to be measured, a vibration generator exciting the tube, and two displacement sensors for sensing displacement of the tube and situated at different locations along the tube, and the flow meter is original in that it further includes a jacket filled with fluid at the same pressure as the flowing fluid and within which the tube is enclosed.

A simple means of guaranteeing equal pressures in the fluids consist in using a closed jacket filled with a liquid of low compressibility: when the fluid flow along the tube reaches a high pressure, it expands the tube slightly, which expansion remains small because of the immediate compression from the liquid in the jacket. This effect can also be guaranteed if the tube includes a flexible portion, such as a membrane or a bellows, which is immersed in the fluid of the jacket

Finally, it is advantageous for the tube to be straight since the confinement jacket can then be of reasonable dimensions since they are similar to those of the measurement tube.

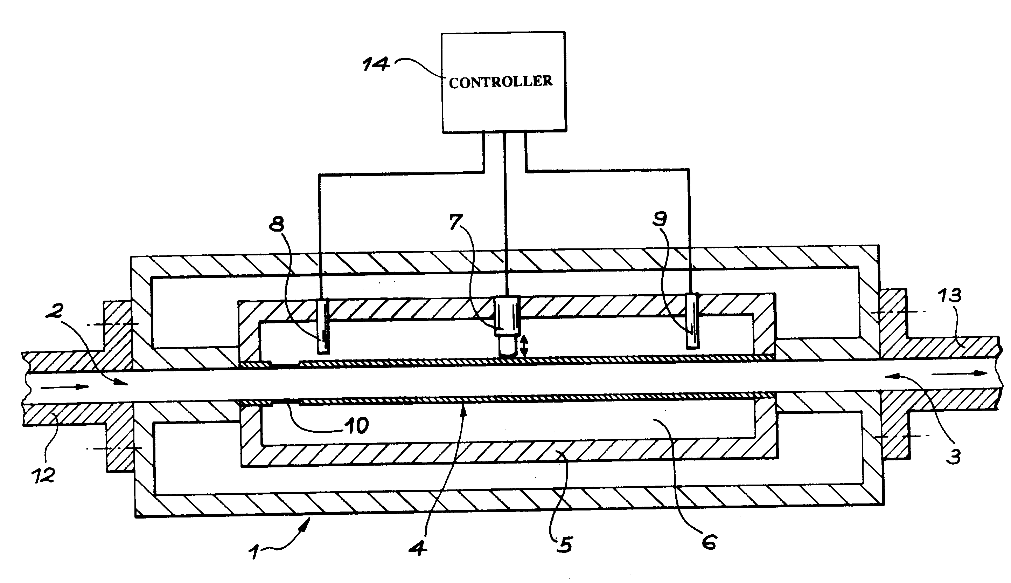

The invention is described below with reference to the sole figure.

The flow meter is housed in a case 1 pierced by an inlet opening 2 and an outlet opening 3 that are in line, with a thin tube 4 extending between them. The case 1 is not essential for the device to operate properly and it could be omitted in certain applications, where it can be advantageous to reduce the width of the device, e.g. down a borehole.

A closed leakproof jacket 5 extends inside the case 1. It interconnects the inlet 2 and the outlet 3 and it defines a chamber 6 having the tube 4 extending along the center thereof, which chamber is filled with a substantially incompressible liquid such as oil. The chamber 6 also contains a vibration generator 7 suitable for imparting transverse displacements to a point halfway along the tube 4, and two displacement sensors 8 and 9 responsive to displacements of the tube 4 and situated symmetrically on either side of the vibration generator 7. The generator 7 and the sensors 8 and 9 are ordinary devices designed to operate at high pressure. The tube 4 is made of an ordinary elastic material such as stainless steel, unless the nature of the flowing fluid requires some other material to be used. Nevertheless, a portion of the length of the tube, and in particular a portion close to one of its inlet 2 and outlet 3, can be replaced by a more flexible membrane 10 or by a bellows which deforms freely and which instantly communicates the pressure of the fluid travelling along the tube 4 to the chamber 6. Nevertheless the membrane 10 is optional since the tube 4 itself deforms under the effect of pressure.

In operation, the case 1 is coupled to inlet and outlet pipes 12 and 13 to cause a flow to pass along the tube 4. Measurement is performed as with a conventional flow meter from a central control and measurement system 14 which controls the vibration generator 7 to excite the tube 4 and to search for its resonant frequency, after which it measures the displacements of the tube 4 at the sensors 8 and 9 and in particular it measures the phase difference between the signals therefrom to deduce the mass flow rate of the fluid. Account needs to be taken of the extra mass added by putting some of the fluid in the chamber 6 into vibration.

The diameter of the tube 4 may be three inches, i.e. 7.5 cm, for a length that is less than 80 cm. Such a diameter makes it possible to pass fluids that are very viscous such as muds and cements. However, it is also possible to replace the single tube 4 with two or even more smaller-diameter tubes in parallel, as in certain previously-known flow meters, and providing the application makes that possible.

A particular application of the invention can lie in the field of drilling for oil, for the purpose of controlling the injection of various fluids into wells;, it makes it possible to measure the flow rate of such fluids at the high-pressure outlets of pumps, and not only at the low-pressure inlets of pumps, as has been the case in the past with existing flow meters of lower strength.

The invention can also be used in making devices for low or medium pressure, thereby making it possible to use measurement tubes that are thinner than those used at present, and thus making it possible: either to make flow meters of greater diameter; or to use materials that are less flexible but that are also less expensive; or else to make sensors that are shorter and therefore easier to use. Another possibility is to replace flow meters of lower performance, but that have previously been used because they are much more compact than existing Coriolis effect flow meters.

## Claims

1. A flow meter comprising a tube (4) conveying a fluid whose flow rate is to be measured, a vibration generator (7) exciting the tube (4), and two displacement sensors (8, 9) for sensing displacement of the tube and situated at different locations along the tube, the flow meter being characterized in that it further includes a jacket (5) filled with fluid at the same pressure as the flowing fluid and within which the tube is enclosed.

2. A flow meter according to claim 1, characterized in that the jacket (5) is closed and the fluid in the jacket is a liquid.

3. A flow meter according to claim 1 or 2, characterized in that the tube (4) is straight.

4. A flow meter according to any one of claims 1 to 3, characterized in that the tube includes a flexible portion (10) immersed in the fluid of the jacket (5).
